Europäisches Patentamt

European Patent Office

Office européen des brevets

(19)

(11) Numéro de publication: **0 219 441**

A1

(12) **DEMANDE DE BREVET EUROPEEN**

(21) Numéro de dépôt: **86430032.2**

(22) Date de dépôt: **22.09.86**

(51) Int. Cl.⁴: **B 60 C 27/14**

(30) Priorité: **24.09.85 FR 8514237**

(43) Date de publication de la demande:
**22.04.87 Bulletin 87/17**

(84) Etats contractants désignés:
**AT BE CH DE GB IT LI LU NL SE**

(71) Demandeur: **Berenger, Jack**
**16, boulevard du Pape Jean XXIII**
**F-06300 Nice(FR)**

(71) Demandeur: **Mouysset, Solange**
**16 Bd du Pape Jean XXIII**
**F-06300 Nice(FR)**

(72) Inventeur: **Berenger, Jack**
**16, boulevard du Pape Jean XXIII**
**F-06300 Nice(FR)**

(72) Inventeur: **Mouysset, Solange**
**16 Bd du Pape Jean XXIII**
**F-06300 Nice(FR)**

(74) Mandataire: **Hautier, Jean-Louis**
**Cabinet Hautier Office Méditerranéen de Brevets**
**d'Invention et de Marques 24 rue Masséna**
**F-06000 Nice(FR)**

(54) **Dispositif à chaines pour roue de véhicule.**

(57) Dispositif à chaînes pour roue de véhicule évoluant sur terrains boueux ou enneigés, caractérisé en ce qu'un accessoire complémentaire jouant le rôle de tirette permet la mise en place et le verrouillage dudit dispositif à chaînes malgré l'enfoncement de la roue dans le sol ou dans la neige.

EP 0 219 441 A1

./...

Fig 1$^a$

Fig 1$^b$

La présente invention concerne une chaîne adaptable sur les roues d'automobile sans avoir à les démonter et apportant une amélioration auxdites automobiles lorsqu'elles ont à progresser dans la neige ou sur sol trop mou, faisant perdre l'adhérence du pneumatique et par conséquent amorcer le patinage des roues motrices. Ladite chaîne est adaptable sur le véhicule même lorsque celui-ci est embourbé.

De nombreux dispositifs existent depuis longtemps, qu'ils soient à pièces métalliques adaptables à la roue, à patins caoutchouc à crampons métalliques, ou entièrement à chaînes dont on ne peut dénombrer tous les dispositifs mis à la disposition des automobilistes, tous ces accessoires présentent un inconvénient majeur : ils sont inadaptables sur la roue lorsque celle-ci est embourbée ou enfouie dans la neige.

L'invention vise à supplanter tous les systèmes de chaînes existants en facilitant la mise en place du dispositif sur une roue embourbée.

Ce dispositif est constitué de deux cables de maintien dont leur longueur est légèrement inférieure à la circonférence du pneumatique. Ces deux câbles sont reliés entre eux à intervalle régulier par des chaînes dont leur longueur est légèrement supérieure à celle de la section transversale correspondant à la bande de roulement du pneumatique. Les extrémités du câble sont reliées entre elles par des attaches rapides et mousquetons de sécurité. Tout ce matériel est connu et utilisé dans d'innombrables applications.

Selon une réalisation particulière du dispositif complété par un accessoire de mise en place et de verrouillage sur les roues motrices, l'utilisateur peut, très rapidement, et avec un minimum d'efforts, équiper les roues de son véhicule immobilisé par les mauvaises conditions du terrain.

Ledit accessoire de mise en place et de verrouillage joue le rôle de tirette pour rapprocher les deux extrémités du câble intérieur dont l'une est équipée d'un anneau et l'autre d'un mousqueton de sécurité. Cet accessoire est constitué principalement d'un morceau de câble, muni à une extrémité d'un embout comportant un cliquet à ressort pour retenir l'extrémité du mousqueton et à l'autre extrémité de ce câble, une poignée facilite la traction exercée par l'utilisateur.

Ce câble coulisse dans une gaine de caoutchouc souple dur façonnée pour recevoir un anneau à une extrémité.

2

La réalisation dudit accessoire est extrêmement simple, peu onéreuse, peu encombrante ce qui permet de le loger avec toute facilité dans le coffre d'une automobile.

Pour mieux comprendre l'invention on va décrire l'installation de ladite chaîne en se référant aux dessins annexés sur lesquels :

    - la figure 1a est une vue de l'extérieur d'une roue d'automobile équipée de ladite chaîne ;

    - la figure 1b est une vue de l'intérieur d'une roue d'automobile équipée de ladite chaîne ;

    - la figure 2 représente l'approche des deux extrémités du câble et l'accessoire dit tirette mis en place ;

    - la figure 3 représente la tirette engagée sur le mousqueton de sécurité ;

    - la figure 4 représente la phase de verrouillage de ladite chaîne.

Deux chaînes sont nécessaires pour chacune des roues motrices, ainsi qu'un système de tirette pour les accrocher.

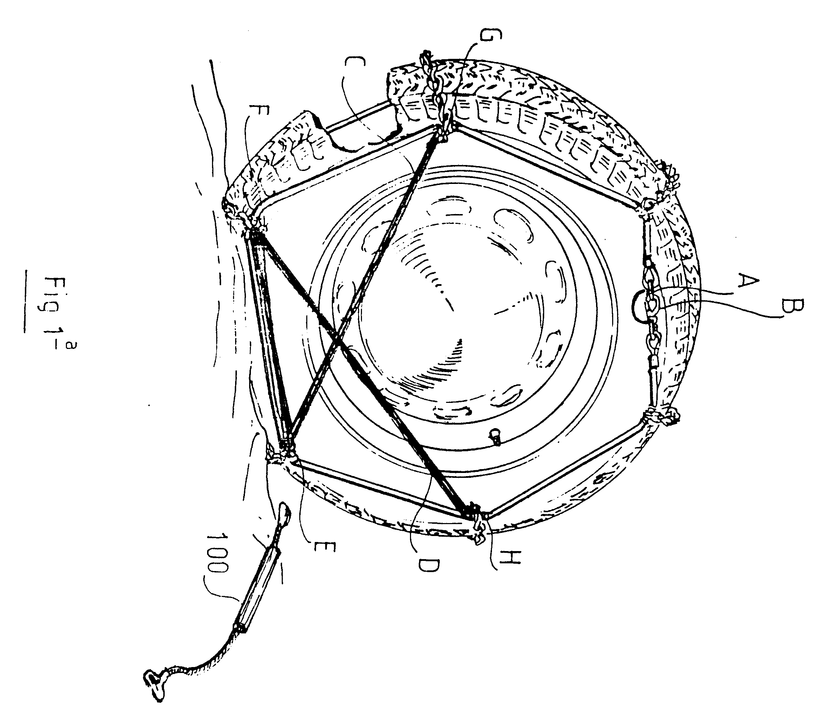

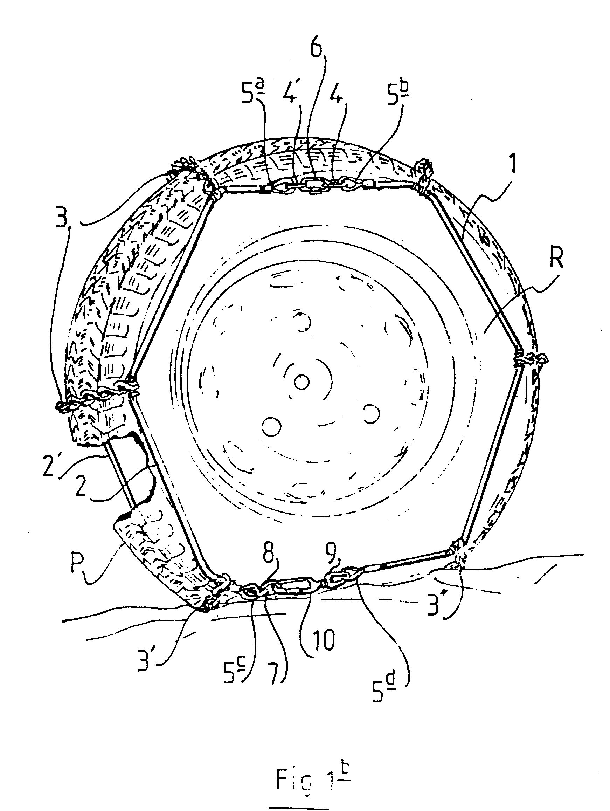

Sur le dessin de la figure 1 on voit une roue (R) d'automobile partiellement enfoncée dans un terrain meuble. Elle est équipée de sa chaîne (1) constituée de deux câbles d'acier enrobés de plastique (2-2') garnissant les flancs du pneumatique (P).

Ces deux câbles sont reliés entre eux par six chaînes torsadées (3) également en acier, disposées transversalement au pneumatique (P) tout en épousant le profil transversal de la bande de roulement, et maintenues à intervalle régulier les unes des autres par des arrêts (11) solidaires des câbles (2-2').

Sur la figure 1, on distingue clairement les six chaînes (3) donnant aux câbles (2-2') une forme hexagonale.

Plus particulièrement les côtés intérieurs diamétralement opposés sont équipés, dans la partie supérieure de la roue (R), d'un système d'attache rapide réalisé par un maillon de jonction (6) relié aux deux extrémités (5a - 5b) du câble 2 par l'intermédiaire de deux anneaux 4 et 4'.

Le maillon de jonction (6) pouvant s'ouvrir on peut donc rompre la continuité du câble (2). Cette opération permet à la chaîne d'être utilisée sur un autre véhicule équipé de pneumatiques différents, en ajoutant des maillons. Des maillons peuvent aussi être ajoutés à la partie de la chaîne placée à l'extérieur et en haut de la roue.

On constate, tout en se référant à la figure 1 qu'il est extrêmement difficile, par l'enfoncement de la roue dans le terrain meuble, de venir refermer la seconde attache rapide et de tendre le câble (2).

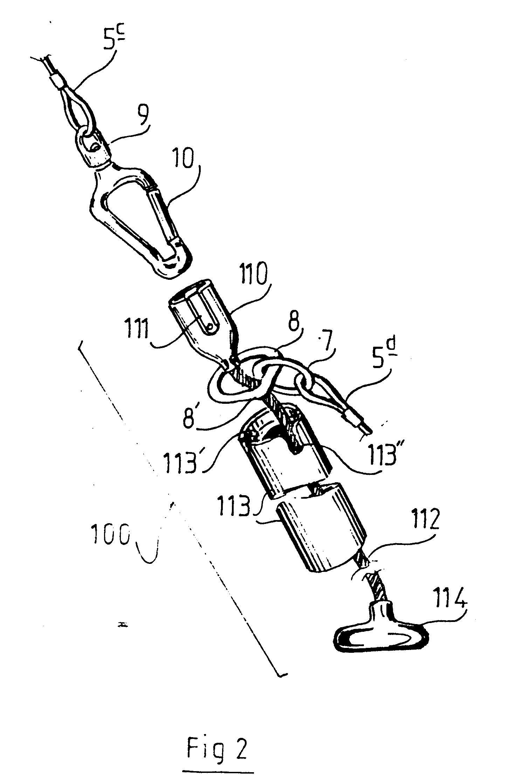

On comprendra mieux à l'aide des figures 2, 3 et 4 comment on vient tendre et verrouiller le dispositif à chaînes bien que la roue soit embourbée.

En se référant à la figure 2, on comprendra l'utilité de l'accessoire ou tirette de mise en place et de verrouillage dans sa première phase active.

L'extrémité inférieure est constituée d'un mousqueton de sécurité (10) équipé d'un émerillon (9) relié à l'extrémité 5d du câble (2).

L'autre extrémité du câble (5c) se termine par un premier anneau (7) puis un second anneau d'accrochage (8) avec une partie déportée (8') permettant à l'anneau (7) de s'y loger.

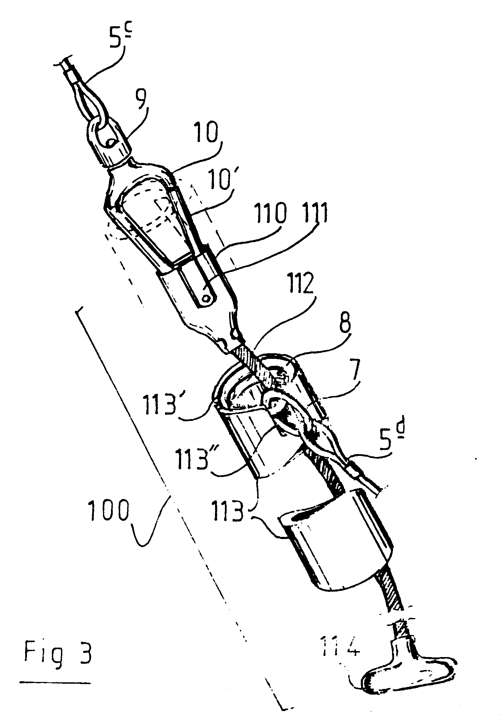

L'embout (110) de la tirette (100) est enfilé dans l'anneau (8) du dispositif à chaîne (1), grâce à ses dimensions inférieures au diamètre intérieur dudit anneau. L'embout (110) possède un cliquet (111) dont la fonction sera décrite ultérieurement avec la figure 3. Sur ledit câble est monté librement une pièce (113) de forme cylindrique en caoutchouc souple-dur dont l'extrémité dirigée vers l'embout (110) est façonnée en un logement coaxial (113') au câble (112) dans lequel peut venir se positionner l'anneau (8) du câble (2). Une encoche latérale (113") permet à l'anneau (7) d'être maintenu en position dans son logement (8') de l'anneau (8) et un étranglement intérieur retient le câble par l'embout.

Le mode d'emploi des chaînes selon l'invention est le suivant :

- on libère tout d'abord le mousqueton (A) de l'anneau (B) (qui se trouveront sur la face extérieure de la roue) qui demeurent écartés mais solidaires grâce à un petit sandow selon la représentation de la figure 1b.

On place alors l'anneau (8) dans le logement (113') du tube (113) et le maillon (7) dans le logement (113").

La figure 2 représente l'embout (110) avec son cliquet à ressort (111) passé à travers l'anneau (8) cette opération peut se faire à l'abri des intempéries. L'ensemble est alors placé sur la roue, l'embout étant placé par derrière et repris de l'autre côté de la roue.

On engage la petite partie du mousqueton (10) dans l'orifice de l'embout (110) de manière que le cliquet à ressort le maintienne légèrement en position telle que le représente la figure 3.

En maintenant alors le caoutchouc (113) d'une main et en tirant la poignée (114) du câble (112) de l'autre, l'embout (110) avec son cliquet à ressort (111) tire le mousqueton (10) à travers l'anneau (8) et qui, en fin de parcours va faire basculer la partie mobile du mousqueton et s'y enclancher.

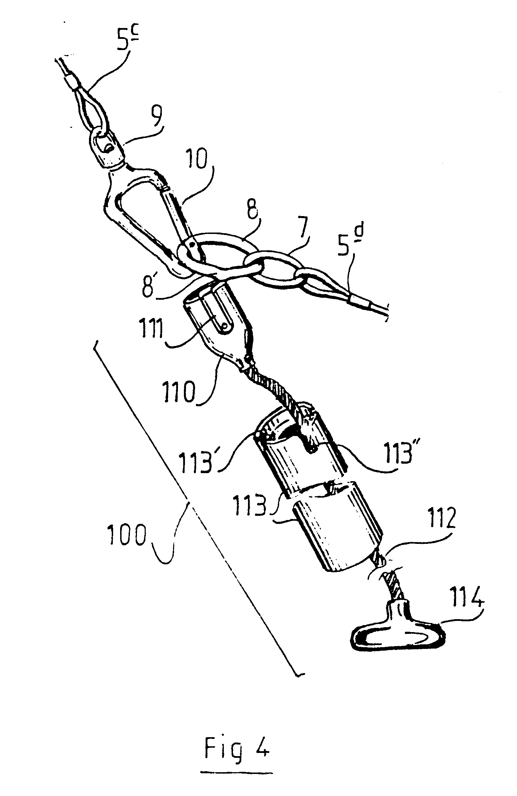

En poursuivant le mouvement avec la poignée (114) du câble (112) l'embout (110) et son cliquet à ressort (111) se séparent automatiquement du mousqueton (10) et l'étranglement du tube caoutchouc (113) entrave le coulissement du câble (112) en arrêtant l'embout (110). La représentation de la figure 4 montre le début de cette dernière phase.

L'attelage complet câble (112) - tube caoutchouc (113) - poignée (114) est donc libéré intégralement au moment de l'accrochage et il n'y a plus qu'à refixer le mousqueton (A) à l'anneau (B) situé sur la face externe de la roue et à fixer les sandows de maintien et de bouclage (C) et (D) aux crochets (E) (F) (G) (H).

**0219441**

REVENDICATIONS.

1.      Dispositif à chaînes pour roue de véhicule évoluant sur terrains boueux ou enneigés, caractérisé en ce qu'un accessoire complémentaire jouant le rôle de tirette permet la mise en place et le verrouillage dudit dispositif à chaînes malgré l'enfoncement de la roue dans le sol ou dans la neige.

2.      Dispositif selon la revendication 1, caractérisé en ce que ladite tirette cumule deux fonctions distinctes en une seule manoeuvre à savoir :

        - tendre le dispositif à chaîne, le verrouiller et ensuite elle est retirée.

3.      Dispositif selon la revendication 2, caractérisé en ce que ladite tirette possède une pièce en caoutchouc souple-dur coulissante et de positionnement de l'anneau d'accrochage.

4.      Dispositif selon les revendications 2 et 3, caractérisé en ce que ladite tirette possède un embout à cliquet capable de s'accoupler à un mousqueton de sécurité.

5.      Dispositif selon les revendications 2, 3 et 4 caractérisé en ce que le cliquet libère automatiquement le mousqueton de sécurité de l'embout de la tirette en continuant de tirer le câble.

Fig 1$^a$

Fig 1<u>b</u>

Fig 2

Fig 3

Fig 4

# RAPPORT DE RECHERCHE EUROPEENNE

Office européen
des brevets

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| X | US-A-2 806 392 (AUGER) <br> * Colonne 1, lignes 59-67; colonne 2, lignes 33-62; figures 1-3 * | 1,2 | B 60 C 27/14 |
| X | FR-A-1 563 808 (INSAM) <br> * Page 3, ligne 30 - colonne 2, ligne 19; figures 1-3 * | 1,2 | |
| A | FR-A-2 201 986 (BOURCIER) <br> * Page 5, ligne 40 - page 6, ligne 10; figure 8 * | 1,5 | |

DOMAINES TECHNIQUES RECHERCHES (Int. Cl.4)

B 60 C

Le présent rapport de recherche a été établi pour toutes les revendications

| Lieu de la recherche | Date d'achèvement de la recherche | Examinateur |
|---|---|---|
| LA HAYE | 18-12-1986 | VALLE,D. |